# EUROPÄISCHE PATENTANMELDUNG

(11) **EP 1 229 626 A1**
(43) Veröffentlichungstag der Anmeldung: **07.08.2002**
(21) Anmeldenummer: 02000508.8
(22) Anmeldetag: 09.01.2002
(51) Int. Cl.: H02G 3/40

(54) **Zug- oder Abzweigdose für einen Unterflurelektroinstallationskanal**

(30) Priorität: 02.02.2001 DE 20102176 U
(71) Anmelder: Albert Ackermann GmbH & Co. KG, 51643 Gummersbach (DE)
(72) Erfinder: Hütt, Christoph, 51645 GUMMERSBACH (DE)
(74) Vertreter: Patentanwälte , Ruff, Wilhelm, Beier, Dauster & Partner

(57) **Zusammenfassung**

Beschrieben wird eine Zug- oder Abzweigdose für einen Unterflurelektroinstallationskanal, die mit einem Kassettendeckel (7) versehen ist, der in einem auf der Oberseite des Randes (2) der Dose (1) befestigten Rahmen (14) eingepasst ist und mit seinem Boden (8) auf einer Dichtung (5) am Rand der Dose aufliegt. Der Rahmen (14) ist an seiner Oberkante mit einer zweiten Dichtung (11) ausgerüstet und die Oberkante des Randes des Kassettendeckels (7) ist mit einem nach außen ragenden Bord (10) versehen, der sich auf die zweite Dichtung (11) auflegt. Durch diese Ausgestaltung wird eine bessere Abdichtung der Zug- oder Abzweigdose erreicht, die daher für nass zu reinigende Steinböden besonders geeignet ist.

## Beschreibung

Die Erfindung betrifft eine Zug- oder Abzweigdose für einen Unterflurelektroinstallationskanal, die mit einem Kassettendeckel versehen ist, der in einem auf der Oberseite des Randes der Dose befestigten Rahmen eingepasst ist und mit seinem Boden auf einer Dichtung am Rand der Dose aufliegt.

Zug- und Abzweigdosen dieser Art sind bekannt (DE-U 29 718 202). Solche Zug- oder Abzweigdosen mit Kassettendeckeln kommen in Fußbodenbereichen zum Einsatz, die beispielsweise mit einem Steinbelag versehen werden, wobei der Kassettendeckel dann zur Aufnahme einer der Steinplatten dient.

Solche Steinböden werden mit Reinigungsmaschinen gesäubert. Solche Böden, die z.B. in Flughäfen oder Bahnhöfen vorgesehen sind, werden auch durch Transportfahrzeuge belastet.

Es hat sich daher gezeigt, dass Zug- und Abzweigdosen der eingangs genannten Art bei extremer Belastung zu einer Verformung des Kassettendeckels neigen, die dazu führt, dass die vorgesehene Dichtung insbesondere bei häufiger Nassreinigung nicht ausreichend ist, so dass Wasser in den Installationskanal eindringen kann.

Der vorliegenden Erfindung liegt daher die Aufgabe zugrundem hier Abhilfe zu schaffen.

Die Erfindung löst das anstehende Problem dadurch, dass der Rahmen an seiner Oberkante mit einer zweiten Dichtung ausgerüstet und die Oberkante des Randes des Kassettendeckels mit einem nach außen ragenden Bord versehen ist, der sich auf die zweite Dichtung auflegt. Durch diese Ausgestaltung wird zum einen eine zweite Abdichtung erreicht. Außerdem wird die Stabilität des Kassettendeckels deutlich erhöht.

In Weiterbildung der Erfindung kann die zweite Dichtung in einer Nut eines von der Rahmenoberkante nach außen abstehenden Steges angeordnet sein. Auch diese Maßnahme dient zur Versteifung des Rahmens und zur einfachen Positionierung der zweiten Dichtung.

Um sicherzustellen, dass der Kassettendeckel mit seinen beiden Abdichtzonen auch ausreichend fest gegen die Dichtungen gedrückt wird, wird in Weiterbildung der Erfindung vorgesehen, dass der Boden des Kassettendeckels mit einer in der Dose angreifenden Schraube versehen und mit dieser gegen den Rand der Dose und den Rand des Rahmens drückbar ist. Der Kassettendeckel kann daher mit Hilfe der Schraube unter einer gewissen Vorspannung an den Dichtungen anliegen. Dadurch wird die Gewähr gegeben, dass bei einer starken Belastung des Kassettendeckels und bei Nassreinigung keine Feuchtigkeit in den Installationskanal eindringen kann.

In Weiterbildung der Erfindung ist die Schraube mittig am Boden des Kassettendeckels angeordnet und wirkt mit einer am Boden der Dose verankerten Leiste zusammen. Vorteilhaft ist die Ausgestaltung so vorgenommen, dass die Schraube mit einem Schraubbolzen zusammenwirkt, der an der Leiste am Boden der Dose angeschraubt ist. Der Schraubbolzen kann in seiner Länge so ausgelegt sein, dass er in Eingriff mit der Schraube kommt und zur Unterstützung des Bodens des Kassettendeckels dient, wodurch eine weitere Versteifung der Kassettendeckelanordnung erreicht wird.

Der Schraubbolzen kann dabei an seinem von der Leiste abgewandten Ende ein Innengewindeteil aufweisen, in das die durch den Boden des Kassettendeckels greifende und am Boden des Kassettendeckels abgestützte Schraube eingreift.

In Weiterbildung der Erfindung kann das Innengewinde Teil einer schwimmend in einer Ausnehmung am Schraubbolzenkopf gehaltenen Mutter sein. Diese Ausgestaltung bringt den Vorteil mit sich, dass Einbautoleranzen ausgeglichen werden können.

In Weiterbildung der Erfindung ist die Schraube durch eine Hülse hindurchgeführt, die am Boden des Kassettendeckels befestigt ist. Diese Hülse kann ein Innengewinde mit einem Durchmesser aufweisen, der größer als der Durchmesser der Schraube ist, so dass die Schraube in der vorher erwähnten Weise in die Mutter des Schraubbolzens einführbar ist.

Durch die gewählte Ausgestaltung der Hülse wird es aber auch in einfacher Weise möglich, einen Schlüssel zum Abheben des Kassettendeckels vorzusehen, der nach dem Entfernen der Schraube mit seinem freien Ende in das Innengewinde der Hülse passt. Um hier eine möglichst einfache Art zum Einschrauben des Schlüssels zu schaffen, kann das Innengewinde an den vom Boden des Kassettendeckels wegweisenden Ende der Hülse vorgesehen sein.

Die Erfindung ist anhand eines Ausführungsbeispiels in den Zeichnungen dargestellt und wird im folgenden beschrieben. Es zeigen:
- Fig. 1: eine perspektivische Schnittdarstellung einer Zug- oder Abzweigdose nach der Erfindung,
- Fig. 2: eine Schnittdarstellung der Abstützleiste in der Dose mit dem eingesetzten Schraubbolzen sowie mit der mit diesem zusammenwirkenden Schraube und einer Abstützhülse,
- Fig. 3: die Draufsicht auf die Abstützhülse mit eingesetzter Schraube nach Fig. 2 und
- Fig. 4: die Seitenansicht eines Schlüssels zum Abheben des Kassettendeckels.

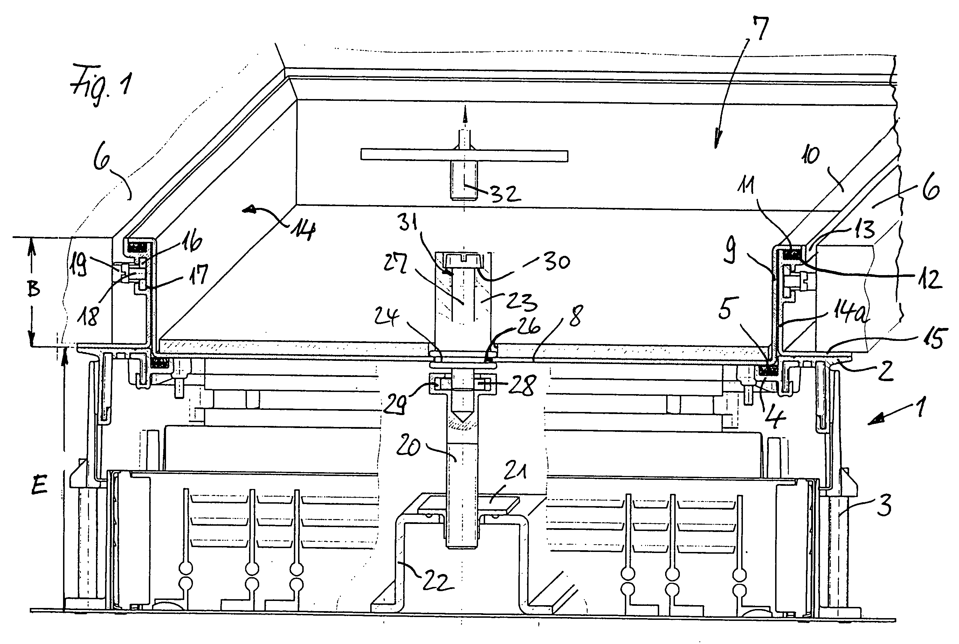

Die Fig. 1 läßt eine Zug- oder Abzweigdose 1 erkennen, die Teil eines Unterflurelektroinstallationskanales ist. Sie ist - wie auch der nicht näher gezeigte Kanal - mit einem Rand versehen, der von Profilen 2 gebildet ist, die über in ihrer Höhe verstellbare Abstützungen 3 in einem bestimmten Abstand zu einem nicht gezeigten Boden einer Gebäudedecke oder dergleichen gehalten ist. Die Profile 2 sind mit einer Nut 4 mit einer eingelegten Dichtung 5 versehen, die umlaufend am Rand der Dose 1 vorgesehen ist, dessen Querprofile in der Darstellung nach Fig. 1 nicht gezeigt sind. Im Inneren der Dose 1 sind in bekannter Weise Einrichtungen zur Verlegung von Elektrokabeln und dergleichen vorgesehen. Die Zug- oder Abzweigdose dient dazu, entweder den Einbau von Geräten im Fußboden zu ermöglichen, die an die verlegten Kabel angeschlossen werden oder dazu, eine Revisionsöffnung für den Unterflurkanal zu bilden.

In bekannter Weise sind dabei die Abstützeinrichtungen 3 und der seitliche Rand der Dose 1 bis zum Maß E im Estrich eingebettet, der auf den Deckenboden aufgebracht wird. Die Höheneinstellung der Profile 2 erfolgt dabei so, dass die Profile 2 estrichbündig verlaufen.

Beim gezeigten Ausführungsbeispiel, bei dem die Dicke B des eigentlichen Bodenbelages zu erkennen ist, wird der Abstand zwischen der Oberkante der Profile 2 und der Oberseite des Bodenbelages 6 von einem Kassettendeckel 7 überbrückt, dessen Boden 8 auf der umlaufenden Dichtung 5 aufliegt und dessen seitliche Ränder 9 bis in die Höhe der Oberkante des Bodens 6 reichen. Der Boden 6 besteht beim Ausführungsbeispiel aus Steinplatten mit der Dicke B. Der Innenraum des Kassettendeckels 7 wird bündig mit Bodenmaterial, beispielsweise mit einer entsprechend bemessenen Steinplatte der gleichen Art wie der Boden 6 versehen. Die Steinplatte wird dabei mit einem mittigen Loch versehen, auf das später noch eingegangen wird.

Wie Fig. 1 zu entnehmen ist, sind die Ränder 9 des Kassettendeckels 7 an ihrem freien Ende mit einem rechtwinklig abgekanteten Bord 10 versehen, der sich oben auf eine zweite Dichtung 11 auflegt, die analog zur Dichtung 5 umlaufend an der Zug- oder Abzweigdose vorgesehen ist. Diese Dichtung 11 liegt dabei in einer Nut 12 einer Leiste 13, die am oberen Ende der Seitenwand eines Rahmens 14 nach außen abragt, der auf den Profilen 2 mit Hilfe eines abgewinkelten Standfußes 15 befestigt ist. Dieser Rahmen 14 kann dadurch gebildet werden, dass vier der Seitenwände 14a zu einem Rechteck oder einem Quadrat zusammengefügt wird. Dies kann dadurch geschehen, dass Winkelstücke 16 jeweils mit ihren Schenkeln in Nuten 17 unterhalb der Leisten 12 eingeschoben und dann mit Hilfe von Schrauben 18 in ihrer Lage befestigt werden, so dass die Seitenwände 14a einen geschlossenen Rahmen 14 bilden. Natürlich wäre es auch möglich, den Rahmen in anderer Weise zusammenzusetzen. Mit den Schenkeln der Winkelstücke 16 verbunden sind Abstandsstücke 19, die dazu dienen, die an den von den Seitenwänden 14a gebildeten Rahmen 14 angrenzenden Platten des Bodenbelages 6 in einem bestimmten Abstand zu halten, der anschließend mit einer flexiblen Dichtmasse nach außen abgeschlossen werden kann.

Um die gewünschte Dichtwirkung beider Dichtungen 5 und 11 zu erreichen ist ein Schraubbolzen 20 vorgesehen, der in ein entsprechendes Gewindestück einer an sich bekannten, am Boden des Elektroinstallationskanals und der Dose 1 verlaufenden Leiste 22 so eingeschraubt ist, dass er zur Abstützung des Bodens 8 des Kassettendeckels 7 dienen kann.

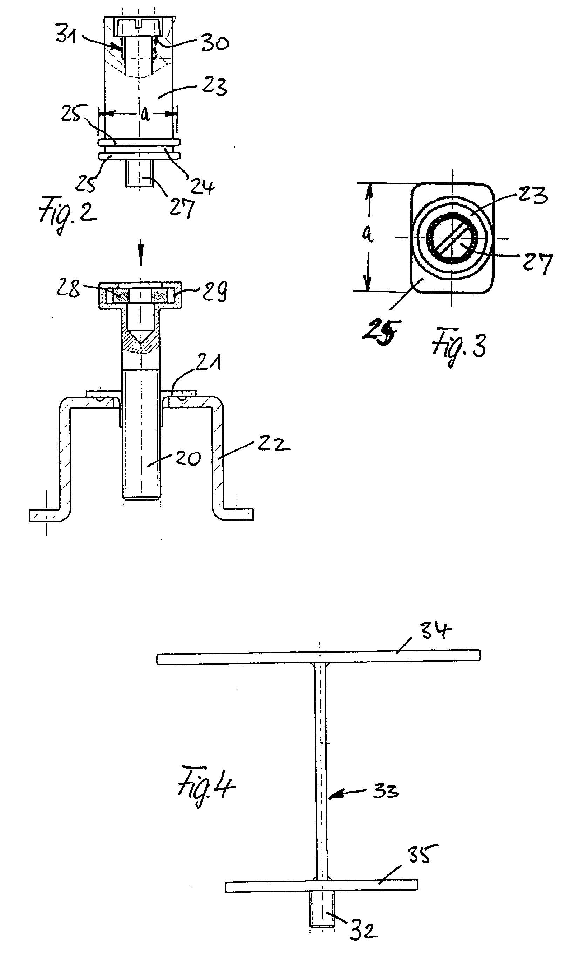

Um das zu erreichen, ist am Boden 8 des Kassettendeckels 7 eine Hülse 23 mit Hilfe einer Nut 24 befestigt, die, wie aus Fig. 3 zu erkennen ist, zwischen zwei parallel zueinander verlaufenden Platten 25 vorgesehen ist, die rechtwinklig ausgebildet sind und eine größere Länge a besitzen, die ausreichend ist, um eine Öffnung 26 im Boden 8 des Kassettendeckels 7 zu übergreifen. Diese Öffnung 26 kann dabei den Abmessungen der Platte 25 entsprechen, so dass nach einer 90°-Verdrehung dieser Platten die Hülse 23 am Boden 8 befestigt ist. Die Hülse 23 besitzt eine zentrale Bohrung, durch die eine Schraube 27 greift, die mit ihrem unterhalb des Bodens 8 liegenden Ende in eine Mutter 28 eingreift, die schwimmend in einer Ausnehmung 29 am Kopf des Schraubbolzens 20 gehalten ist. Durch die schwimmende Anordnung dieser Mutter 28 kann erreicht werden, dass die Schraube 27 nach Einsetzen des Kassettendeckels trotz Einbautoleranzen mit dem Schraubbolzen 20 ohne Probleme in Verbindung gebracht werden kann.

Der Kopf der Schraube 27 drückt auf einen Absatz 30 der Hülse, die daher beim Einschrauben der Schraube 27 in die Mutter 28 auch den Kassettenboden 8 und damit den gesamten Kassettendeckel 7 nach unten zieht. Die Hülse 23, die Öffnung 26 und die Schraube 27 sind zu diesem Zweck mittig im Boden 8 des Kassettendeckels 7 vorgesehen. Durch die durch das Einschrauben der Schraube 27 bewirkte Vorspannung drückt einerseits der Boden 8 des Kassettendeckels 7 andererseits sein Bord 10 auf die jeweils zugeordneten Dichtungen 5 und 11, so dass auf diese Weise ein dichter Abschluß erreicht werden kann.

Es ist vorgesehen, dass im Bereich des Absatzes 30 ein Gewinde 31 in der Hülse 23 vorgesehen ist, dessen Durchmesser aber größer ist als der Schaftdurchmesser der Schraube 27. Ein in das Gewinde 31 passendes Gewindestück 32 ist am Ende eines Schlüssels 33 vorgesehen, der an dem vom Gewindestück 32 abgewandten Ende seines mit dem Gewindestück 32 fluchtenden Schaftes mit einer Querstange 34 versehen ist. Der Schaft des Schlüssels 33 ist vom Gewindestück 32 durch eine Platte 35 getrennt. Wird die Schraube 27 gelöst, was durch Durchführen eines entsprechenden Werkzeuges durch ein im Bodenbelag, beim Ausführungsbeispiel in einer Steinplatte vorgesehenes Loch geschehen kann, das fluchtend zu der Hülse 23 verläuft, dann kann das Gewindestück 32 des Schlüssels 33 in das Innengewinde 31 der Hülse 23 eingedreht werden. Der Kassettendeckel 7 lässt sich dann einwandfrei aus seiner Führung innerhalb des Rahmens 14 nach oben abziehen. Die Hülse 23, Schraubbolzen 20 und Schraube 27 bzw. Schlüssel 33 übernehmen daher eine Doppelfunktion. Sie dienen zum einen zum Anpressen des Kassettendeckels 7 an seine beiden Dichtungen 5 und 11. Zum anderen können sie auch zur Demontage des Kassettendeckels 7 ausgenützt werden.

## Patentansprüche

1. Zug- oder Abzweigdose für einen Unterflurelektroinstallationskanal, die mit einem Kassettendeckel (7) versehen ist, der in einem auf der Oberseite des Randes (2) der Dose (1) befestigten Rahmen (14) eingepasst ist und mit seinem Boden (8) auf einer Dichtung (5) am Rand der Dose aufliegt, **dadurch gekennzeichnet, dass** der Rahmen (14) an seiner Oberkante mit einer zweiten Dichtung (11) ausgerüstet und die Oberkante des Randes des Kassettendeckels (7) mit einem nach außen ragenden Bord (10) versehen ist, der sich auf die zweite Dichtung (11) auflegt.

2. Zug- oder Abzweigdose nach Anspruch 1, **dadurch gekennzeichnet, dass** die zweite Dichtung (11) in einer Nut (12) eines von der Rahmenoberkante nach außen abstehenden Steges (13) angeordnet ist.

3. Zug- oder Abzweigdose nach Anspruch 1, **dadurch gekennzeichnet, dass** der Boden (8) des Kassettendeckels (7) mit einer in der Dose (1) angreifenden Schraube (27) versehen und mit dieser gegen den Rand (2) der Dose und gegen den Rand des Rahmens (14) drückbar ist.

4. Zug- oder Abzweigdose nach Anspruch 3, **dadurch gekennzeichnet, dass** die Schraube (27) mittig am Boden (8) des Kassettendeckels (7) angeordnet ist und mit einer am Boden der Dose (1) verankerten Leiste (22) in Eingriff steht.

5. Zug- oder Abzweigdose nach Anspruch 4, **dadurch gekennzeichnet, dass** die Schraube (27) mit einem Schraubbolzen (20) zusammenwirkt, der an der Leiste (22) am Boden der Dose (1) angeschraubt und in seiner Länge so ausgelegt ist, dass er in Eingriff mit der Schraube (27) kommt.

6. Zug- oder Abzweigdose nach Anspruch 5, **dadurch gekennzeichnet, dass** der Schraubbolzen (20) einen in die Leiste (22) eingreifenden Schraubteil und an seinem von der Leiste (22) abgewandten Ende ein Innengewindeteil (28) aufweist, in das die durch den Boden (8) des Kassettendeckels (7) greifende Schraube (27) eingreift.

7. Zug- oder Abzweigdose nach Anspruch 6, **dadurch gekennzeichnet, dass** das Innengewinde Teil einer schwimmend in einer Ausnehmung (29) am Kopf des Schraubbolzens (20) gehaltenen Mutter (28) ist.

8. Zug- oder Abzweigdose nach Anspruch 3, **dadurch gekennzeichnet, dass** die Schraube (27) durch eine Hülse (23) geführt ist, die am Boden (8) des Kassettendeckels (7) befestigt ist.

9. Zug- oder Abzweigdose nach Anspruch 8, **dadurch gekennzeichnet, dass** die Hülse (23) ein Innengewinde (31) mit einem Durchmesser aufweist, der größer als der Durchmesser der Schraube (27) ist.

10. Zug- oder Abzweigdose nach Anspruch 9, **dadurch gekennzeichnet, dass** ein Schlüssel (33) zum Abheben des Kassettendeckels (7) vorgesehen ist, der nach dem Entfernen der Schraube (27) mit einem am freien Ende vorgesehenen Gewindestück (32) in die Mutter (28) passt.

11. Zug- oder Abzweigdose nach Anspruch 9, **dadurch gekennzeichnet, dass** das Innengewinde (31) an dem vom Boden (8) des Kassettendeckels (7) abgewandten Ende der Hülse (23) vorgesehen ist.
